# EUROPÄISCHE PATENTSCHRIFT

(11) **EP 1 243 987 B1**
(45) Veröffentlichungstag und Bekanntmachung des Hinweises auf die Patenterteilung: **05.10.2011**
(21) Anmeldenummer: 01106368.2
(22) Anmeldetag: 19.03.2001
(51) Int. Cl.: G05B 19/042, G06F 9/48

(54) **Verfahren und Anordnung zur Steuerung der Ausführung von Teilaufgaben eines Prozesses**
Method and apparatus for the control of performing of part-tasks of a process
Procédé et appareil pour la commande de la mise en oeuvre de tâches partielles d'un procédé

(43) Veröffentlichungstag der Anmeldung: 25.09.2002
(73) Patentinhaber: Siemens Enterprise Communications GmbH & Co. KG, 81379 München (DE)
(72) Erfinder: Fally, Gerhard, 1140 Wien (AT)
(74) Vertreter: Fritzsche, Thomas

(56) Entgegenhaltungen:
- DE-A- 19 500 957
- DE-A- 19 527 541

## Beschreibung

Die Erfindung betrifft ein Verfahren zur Steuerung eines Prozesses, wobei der Prozess in mehrere Teilaufgaben gegliedert ist und diesen Teilaufgaben verschiedene Prioritätsstufen zugewiesen sind. Weiterhin betrifft die Erfindung eine Anordnung zur Durchführung des Verfahrens.

Komplexe Prozesse können aufgrund ihres Aufbaus häufig nur dann effizient gehandhabt werden, wenn sie in mehrere Teilaufgaben gegliedert werden. Dabei werden die einzelnen Teilaufgaben von einem Steuerprozess nacheinander oder gegebenenfalls auch parallel abgearbeitet, wobei die Aufeinanderfolge der einzelnen Teilaufgaben vorgegebenen Gesetzmäßigkeiten genügt. Beispielsweise können die Teilaufgaben verschiedene Prioritätsstufen aufweisen.

Ein Beispiel für ein Verfahren zur Steuerung der Ausführung von Teilaufgaben eines Prozesses ist ein Betriebssystem, welches auf einem Personal Computer abläuft. Eine Teilaufgabe ist dabei beispielsweise die Datenübermittlung zwischen peripheren Einheiten, etwa die Übermittlung eines Ausdrucks an einen angeschlossenen Drucker, das Einlesen von Zeichen einer angeschlossenen Tastatur und die Kommunikation zu einer Vielzahl weiterer Geräte. Als Teilaufgabe kann aber auch ein Anwenderprogramm verstanden werden, welches unter der Kontrolle des Betriebssystems abläuft, zum Beispiel Textverarbeitungsprogramme, Zeichenprogramme und eine Fülle weiterer Programme.

Die dabei auftretenden Anforderungen an die Prozessteuerung richten sich dabei vordergründig nach dem Verhalten des Benutzers, der im wesentlichen in beliebiger Reihenfolge die verschiedenen Teilaufgaben aufrufen kann. Zusätzlich ist üblicherweise auch noch eine Reihe von Teilaufgaben abzuarbeiten, die für den Benutzer zumeist unsichtbar ablaufen, wie zum Beispiel die laufende Erhöhung eines Zählers zur Speicherung der Systemzeit.

Um eine Möglichkeit zu schaffen, bei der Teilaufgaben zu jeder Zeit ausgeführt werden können, kann die Prozessteuerung mittels sogenannter "Interrupts" erfolgen. Diese Interrupts unterbrechen die momentan ablaufende Teilaufgabe, setzen die Ausführung bei der unterbrechenden, wichtigeren Teilaufgabe und nach deren Ende an der Stelle fort, an der die ursprüngliche Teilaufgabe unterbrochen wurde.

Diese Technik wird vorwiegend bei zeitkritischen Systemen angewandt, beispielsweise bei Robotern, Werkzeugmaschinen und dergleichen. Eine wichtige Teilaufgabe, die aufgrund einer mangelnden Prozessteuerung nicht zeitgerecht ausgeführt werden kann, verursacht möglicherweise großen Schaden oder schlimmstenfalls die Gefährdung von Menschenleben.

Aber auch die Unterbrechung von Teilaufgaben bedingt unerwünschte Effekte, beispielsweise wenn wichtige Teilaufgaben durch noch höher priorisierte Teilaufgaben unterbrochen werden. Dies führt zu einer immer größeren Verschachtelung von Teilaufgaben, deren Zeitverhalten nur schwer vorhergesagt werden kann.

Denkbar ist auch, dass eine Teilaufgabe aufgrund der auszuführenden Tätigkeiten nicht unterbrochen werden darf, beispielsweise wenn diese Daten aufbereitet, die eine andere, nachfolgend auszuführende Teilaufgabe benötigt. Eine unvollständige Aufbereitung kann in diesem Fall zu ungewollten Fehlern in der Ausführung einer Teilaufgabe führen.

Nächstliegender Stand der Technik ist DE-A- 195 00 957, welcher ebenfalls ein Verfahren mit zugehöriger Vorrichtung zur Steuerung von Prozessen offenbart, wobei der Prozess in mehrere Teilaufgaben gegliedert ist und diesen Teilaufgaben verschiedene Prioritätsstufen zugewiesen sind. Diese Prioritätsstufe gibt die Dringlichkeit der Abarbeitung dieser Teilaufgabe an. Dabei wird mittels eines Zeitzählers der gewünschte Startzeitpunkt der einzelnen Aufgaben gespeichert und das jeweiligen Aufgabenprogramm anhand gespeicherter information über den Startzeitpunkt sowie anhand der Prioritötsstufe sequentiell ausgeführt, wobei Aufgabenprogramme mit höherer Priorität andere Aufgabenprogramme jederzeit unterbrechen können.

Aufgabe der Erfindung ist es daher ein Verfahren anzugeben, welche die Steuerung der Ausführung von Teilaufgaben eines Prozesses verbessert.

Dies geschieht erfindungsgemäß mit einem Verfahren der eingangs erwähnten Art, nach den kennzeichnenden Mermalen von Anspruch 1

Auf diese Weise kann der unterbrechungsfreie Ablauf einer Teilaufgabe und durch entsprechende Gliederung eines Prozesses in Teilaufgaben ein vergleichsweise sicherer und vorhersehbarer Ablauf des Prozesses vorteilhaft gewährleistet werden. Das Verfahren sieht außerdem eine Unterscheidung der Teilaufgaben nach Zeit und Priorität vor, um sowohl Echtzeitaufgaben, als auch Systemen Rechnung zu tragen, bei denen Teilaufgaben, die beispielsweise Sicherungsnassnahmen dienen, vorrangig behandelt werden. Die Erfindung eignet sich daher für den Einsatz auf dem Gebiet der digitalen Signalverarbeitung, beispielsweise für digitale Signalprozessoren, aber auch für Prozesse, die in Vermittlungsknoten ablaufen, insbesondere Vermittlungsknoten von Datennetzen oder Telekommunikationsnetzen.

Günstig ist es dabei,
- dass die Prioritätsstufen der Teilaufgaben mittels einer binären Zahl gespeichert werden,
- dass diese binäre Zahl zumindest ebenso viele Stellen aufweist, wie Teilaufgaben vorhanden sind und
- dass dem Stellenwert einer Ziffer dieser binären Zahl jeweils eine Prioritätsstufe zugeordnet wird.

Auf diese Weise kann die Prioritätsstufe einer Teilaufgabe effizient gespeichert und gehandhabt werden, da einerseits die kleinstmögliche Speichereinheit zur Speicherung verwendet wird, und andererseits leistungsfähige Algorithmen zur Ermittlung der höchstprioren Teilaufgabe existieren. Entspricht beispielsweise ein höherer Stellenwert einer höheren Prioritätsstufe, so kennzeichnet bei positiver Logik das ranghöchste belegte Bit die Teilaufgabe mit der höchsten Prioritätsstufe.

Günstig ist es auch wenn,
- die erste Speichereinrichtung als Ringspeicher organisiert wird und
- diese erste Speichereinrichtung zyklisch zu festgelegten Zeitpunkten ausgelesen wird.

Mit dieser Form der Speicherorganisation wird der zeitlich unlimitierte Ablauf des Prozesses gewährleistet. Das zyklische Auslesen der ersten Speichereinrichtung zu festgelegten Zeitpunkten bietet überdies die Grundlage für die vergleichsweise einfach anzustellende Betrachtung über den in der Zukunft liegenden Teil des ablaufenden Prozesses.

Eine vorteilhafte Ausgestaltung des erfindungsgemäßen Verfahrens ist gegeben, wenn während der Ausführung einer Teilaufgabe die gewünschte Aufrufzeit einer Teilaufgabe, insbesondere der ausgeführten Teilaufgabe, ermittelt wird. Diese Variante bietet Vorteile wenn schon während des Ablaufs einer Teilaufgabe Tatsachen bekannt sind, welche die Grundlage für die Ermittlung eines günstigen Zeitpunkts des Aufrufs einer Teilaufgabe bieten, insbesondere des abermaligen Aufrufs der gerade ausgeführten Teilaufgabe. Diese Aufgabe kann auch von einem Steuermodul übernommen werden, welches nach der Ausführung der Teilaufgabe aktiv wird. In jedem Fall kann die Speicherung des Zeitpunktes durch Eintragung in ein fixes Zeitraster oder durch Speicherung einer absoluten oder relativen Zeitspanne erfolgen. Auch eine Kombination der beiden Speicherarten ist denkbar.

Besonders vorteilhaft ist es,
- wenn für die Steuerung ein erster Teilprozess und ein zweiter Teilprozess vorgesehen wird,
- wenn der erste Teilprozess asynchron zum zweiten Teilprozess abläuft,
- wenn der erste Teilprozess die erste Speichereinrichtung zyklisch zu festgelegten Zeitpunkten ausliest und
- wenn der zweite Teilprozess die Teilaufgaben sequentiell abarbeitet.

Auf diese Weise wird die Steuerung funktionell übersichtlich in zwei Bereiche geteilt. Beide Teilprozesse können dabei im Bezug auf eine gegenseitige Blockierung im wesentlichen unabhängig voneinander ablaufen. Das zyklische Auslesen zu festgelegten Zeitpunkten und das sequentielle Abarbeiten der Teilaufgaben sind unter anderem Grundlage für ein vergleichsweise einfach vorherzusagendes Verhalten des ablaufenden Prozesses.

Vorteilhaft ist es weiterhin,
- wenn der erste Teilprozess die erste Speichereinrichtung zyklisch zu festgelegten Zeitpunkten ausliest und die auszuführenden Teilaufgaben in eine zweite Speichereinrichtung überträgt und
- wenn der erste Teilprozess die ausgelesene Speichereinheit der ersten Speichereinrichtung bis auf die in einer dritten Speichereinrichtung markierten Teilaufgaben löscht.

Die zweite Speichereinrichtung dient dabei zur Speicherung eines Ergebnisses des ersten Teilprozesses, hilft die Funktionen die Steuerung zu entkoppeln und kann als Eingabe für den zweiten Teilprozess herangezogen werden. Zusätzlich werden in einer dritten Speichereinrichtung beispielsweise zyklisch wiederkehrende gewünschte Startzeitpunkte der Teilaufgaben gespeichert. Im ersten Teilprozess wird dies dadurch berücksichtigt, dass die ausgelesene Speichereinheit der ersten Speichereinrichtung bis auf die in der dritten Speichereinrichtung markierten Teilaufgaben gelöscht wird.

Günstig ist es, wenn der zweite Teilprozess die zweite Speichereinrichtung ausliest und die Teilaufgabe mit der höchsten Priorität ausführt, wenn die zweite Speichereinrichtung nicht leer ist und eine Leerfunktion aufruft, wenn die zweite Speichereinrichtung leer ist. So kann ein reibungsloser Ablauf des zweiten Teilprozesses mit einem einfachen Mechanismus gewährleistet werden.

Die Aufgabe der Erfindung wird auch durch eine Vorrichtung gelöst, nach den kennzeichnenden Merkmalen von Anspruch 7

Die beim erfindungsgemäßen Verfahren angeführten Vorteile gelten auch für die Anordnung gleichermaßen. Die vorgesehen Mittel bilden unter anderem die Basis für einen vergleichsweise leicht vorhersehbaren Ablauf des Prozesses. Außerdem wird die Grundlage für ein System geschaffen, welches den Aufruf einer Teilaufgabe vom zugeordneten Aufrufzeitpunkt und der entsprechenden Prioritätsstufe abhängig macht.

Günstig ist es,
- wenn als Mittel zur Speicherung eines gewünschten Startzeitpunktes für eine Teilaufgabe und als Mittel zur Speicherung der Prioritätsstufe eine erste Speichereinrichtung vorgesehen ist,
- wenn die Speichereinrichtung aus zumindest zwei Speicherzellen aufgebaut ist,
- wenn eine Speicherzelle für die Speicherung des gewünschten Startzeitpunkts einer Teilaufgabe vorgesehen ist und
- wenn jeder Speicherzelle eine Prioritätsstufe zugeordnet ist.

Auf diese Weise wird eine Organisationsform für die erste Speichereinrichtung erreicht, welche sowohl effizient im Hinblick auf den benötigten Speicherplatz ist, als auch eine einfache Möglichkeit zur Ermittlung der Prioritätsstufe der jeweiligen Teilaufgabe bietet.

Vorteilhaft ist es dabei, wenn die erste Speichereinrichtung als Ringspeicher ausgebildet ist. Mit dieser Form der Speicherorganisation wird der zeitlich unlimitierte Ablauf des Prozesses gewährleistet.

Eine besonders vorteilhafte Ausgestaltung der Erfindung ist gegeben,
- wenn als Mittel zur Speicherung eines gewünschten Startzeitpunktes für eine Teilaufgabe und als Mittel zur Speicherung der Prioritätsstufe eine erste Speichereinrichtung vorgesehen ist,
- wenn die Speichereinrichtung aus zumindest zwei Speicherzellen aufgebaut ist,
- wenn die Speicherzellen in Zeilen und Spalten organisiert sind,
- wenn jeder Zeile ein gewünschter Startzeitpunkt zugeordnet ist und
- wenn jeder Spalte eine Prioritätsstufe zugeordnet ist. Somit kann einer Teilaufgabe allein durch Eintragung in eine bestimmte Speicherzelle der ersten Speichereinrichtung eine bestimmte Prioritätsstufe und ein gewünschter Startzeitpunkt zugeordnet werden. Diese Variante zeichnet sich daher durch besonders effizienten Ausnutzung der eingesetzten Ressourcen aus. Vorteilhaft ist auch bei dieser Variante die erste Speichereinrichtung als Ringspeicher ausgebildet.

Günstig ist es auch, wenn eine zweite Speichereinrichtung vorgesehen ist, die der Zwischenspeicherung der Informationen über die zur Ausführung anstehenden Teilaufgaben dient, insbesondere als Übergabespeicher zwischen erstem und zweitem Teilprozess.

Vorteilhaft ist es weiterhin, wenn eine dritte Speichereinrichtung zur Speicherung zyklisch wiederkehrender gewünschter Startzeitpunkte der Teilaufgaben vorhanden ist. Somit können Informationen über gewünschte Startzeitpunkte von Teilaufgaben, die immer zu fixen Zeitpunkten ausgeführt werden sollen, effizient verwaltet werden.

Günstig ist es auch, wenn eine vierte Speichereinrichtung vorgesehen ist, die der Speicherung von gewünschten Aufrufzeitpunkten von Teilaufgaben in Form einer relativen oder absoluten Zeitspanne dienen. Auf diese Weise ist eine Verwaltung von Zeitpunkten möglich, welche den zulässigen Bereich der ersten Speichereinrichtung überschreiten würde. Denkbar ist eine Speicherung von Zeitpunkten in einer anderen, zumeist feineren Unterteilung, als dies in der ersten Speichereinrichtung ausführbar wäre. Aber auch die Überschreitung der größtmöglichen Zeitspanne, die sich aus dem Aufbau der ersten Speichereinrichtung ergibt, ist prinzipiell möglich.

Die Erfindung wird anhand eines in den Figuren dargestellten Ausführungsbeispiels näher erläutert, welches ein beispielhaftes Verfahren zur Steuerung eines Prozesses betrifft, welcher mehrere Teilaufgaben TA und eine Unterfunktion IDLE beinhaltet. Es zeigen:
Figur 1: Ein Ablaufdiagramm eines ersten Teilprozesses P1
Figur 2: Ein Ablaufdiagramm eines zweiten Teilprozesses P2
Figur 3: Die Ablaufdiagramme einer ersten bis n-ten Teilaufgabe TA1..TAn und das Ablaufdiagramme einer Unterfunktion IDLE
Figur 4: Ein Ablaufdiagramm einer Unterfunktion SETBIT
Figur 5: Die Inhalte der ersten Speicherzelle x, der zweiten Speicherzelle y, der dritten Speicherzelle p und der vierten Speicherzelle CT zum Zeitpunkt t=0-, nach der Initialisierung aber vor der Ausführung des ersten Teilprozesses P1.
Figur 6: Wie Figur 5, nur zum Zeitpunkt t=0+, nach der Ausführung des ersten Teilprozesses P1.
Figur 7: Wie Figur 5, nur zum Zeitpunkt t=30-, vor der Ausführung des ersten Teilprozesses P1.
Figur 8: Wie Figur 5, nur zum Zeitpunkt t=30+, nach der Ausführung des ersten Teilprozesses P1.
Figur 9: Wie Figur 5, nur zum Zeitpunkt t=60-, vor der Ausführung des ersten Teilprozesses P1.
Figur 10: Wie Figur 5, nur zum Zeitpunkt t=60+, nach der Ausführung des ersten Teilprozesses P1.

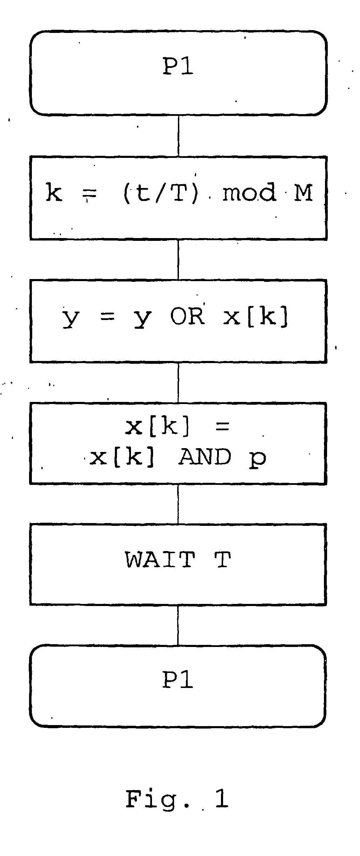

Figur 1 zeigt ein Ablaufdiagramm eines ersten Teilprozesses P1. In einem ersten Schritt wird dabei ein Index k aus der Systemzeit t, einem Zeitabstand T, der Anzahl der Teilaufgaben M und mit Hilfe der Funktion k = (t/T) mod M errechnet. Danach wird in einem zweiten Schritt die zweite Speichereinrichtung y dadurch verändert, dass die Zeile k der ersten Speichereinrichtung x mittels einer bitweisen ODER-Funktion y = y OR x[k] in die zweite Speichereinrichtung y übertragen wird. In einem dritten Schritt wird die bitweise UND-Verknüpfung x[k] = x[k] AND p der Zeile k der ersten Speichereinrichtung x und der dritten Speichereinrichtung p gebildet und das Ergebnis in die Zeile k der ersten Speichereinrichtung x übertragen. Danach wird in einem vierten Schritt ein Wartefunktion mit dem Zeitabstand T ausgeführt, wobei angenommen wird, dass die vorhergehenden Schritte verzögerungsfrei ausgeführt wurden. Danach wird die Ausführung des ersten Teilprozesses P1 wieder beim ersten Schritt fortgesetzt, sodass sich für den ersten Teilprozess P1 ein zyklischer Ablauf ergibt, bei dem die einzelnen Schritte in fixen Zeitabständen T ausgeführt werden.

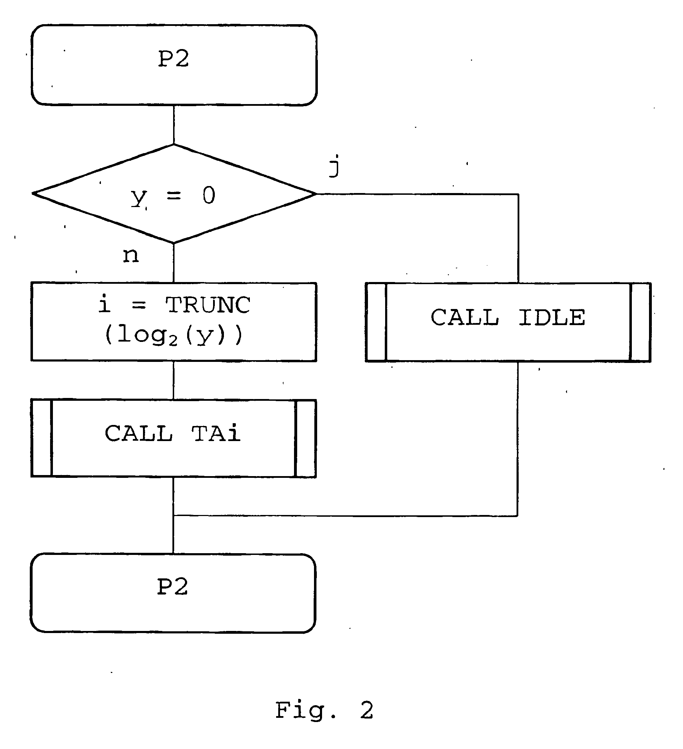

Figur 2 zeigt ein Ablaufdiagramm eines zweiten Teilprozesses P2. Der erste Schritt wird durch eine Verzweigung gebildet, bei der abgefragt wird, ob der Inhalt der zweiten Speicherzelle y den Wert 0 ergibt. Trifft dies zu, wird eine Leerfunktion IDLE aufgerufen und danach wieder zum Beginn des zweiten Teilprozesses P2 verzweigt. Andernfalls wird in einem negativen Zweig ein Index i mit Hilfe der zweiten Speicherzelle y und der Funktion i = TRUNC(log₂(y)) ermittelt. Dieser Index i gibt die Prioritätsstufe der jeweiligen Teilaufgaben an, wobei i=0 die niedrigste, i=N-1 die höchste Priorität bezeichnet. In Folge wird die Teilaufgabe mit der höchsten Prioritätsstufe TAi ausgeführt. Danach wird ebenfalls zum Beginn des zweiten Teilprozesses P2 verzweigt, wodurch sich auch für den zweiten Teilprozesses P2 ein immer wiederkehrender Ablauf ergibt. Im Gegensatz zum ersten Teilprozess P1 werden die einzelnen Schritte hier aber nicht zwingend in fixen Zeitabständen T ausgeführt.

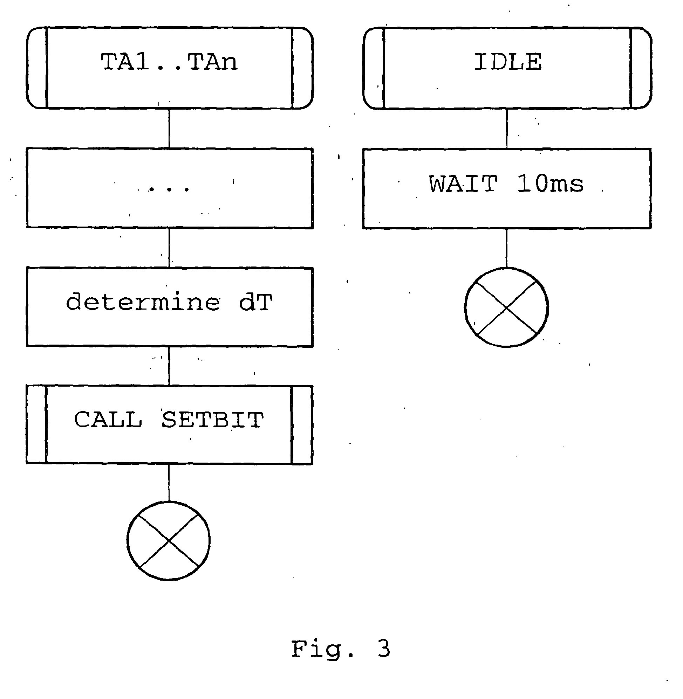

Figur 3 zeigt ein Ablaufdiagramm einer ersten bis n-ten Teilaufgabe TA1..TAn und einer Leerfunktion IDLE. In einem ersten Schritt werden bei der ersten bis n-ten Teilaufgabe TA1..TAn spezifische Aufgaben ausgeführt. Danach wird in einem zweiten Schritt das Zeitintervall dT festgelegt, nach dessen Ablauf die entsprechende Teilaufgabe wieder aufgerufen werden sollte. In einem dritten Schritt wird die Unterfunktion SETBIT aufgerufen, welcher zugleich auch den letzten Schritt der ersten bis n-ten Teilaufgabe TA1..TAn bildet. In der Leerfunktion IDLE wird vereinfacht lediglich eine Wartefunktion mit einer festgelegten Wartezeit ausgeführt.

Denkbar sind aber auch komplexere Aufgaben für die Leerfunktion IDLE.

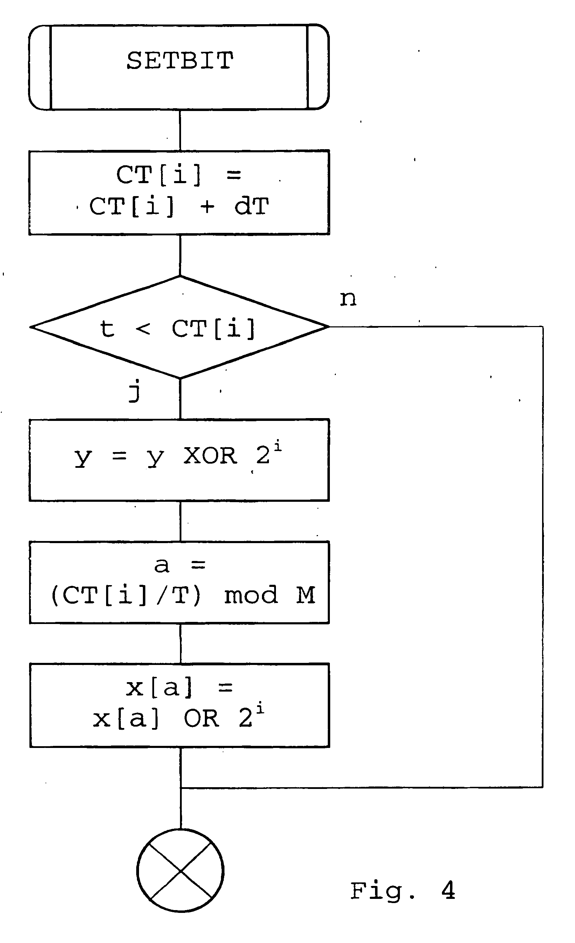

Figur 4 zeigt den Ablauf der Unterfunktion SETBIT. In einem ersten Schritt wird zum Inhalt der Zeile i einer vierten Speicherzelle CT das Zeitintervall dT addiert. Der zweite Schritt wird durch eine Verzweigung gebildet, bei der abgefragt wird, ob die Systemzeit t kleiner als die in der Zeile i der vierten Speicherzelle CT gespeicherte Zeit ist. Trifft dies nicht zu, so wird sofort auf das Ende der Unterfunktion SETBIT verzweigt. Andernfalls wird in einem weiteren Schritt das Bit, welches die Teilaufgabe TAi in der zweiten Speichereinrichtung y repräsentiert, mit Hilfe der Funktion y = y XOR 2ⁱ zurückgesetzt. In einem darauf folgenden Schritt wird ein Index a aus dem Inhalt der Zeile i einer vierten Speicherzelle CT, dem Zeitabstand T und der Anzahl der möglichen gewünschten Aufrufzeitpunkte M mittels a = (CT[i]/T) mod M gebildet. In einem weiteren Schritt wird das Bit, welches die Teilaufgabe TAi in der Zeile a der ersten Speichereinrichtung x repräsentiert, durch die Funktion x[a] = x[a] OR 2ⁱ gesetzt. Dieser Schritt bildet zugleich das Ende der Unterfunktion SETBIT.

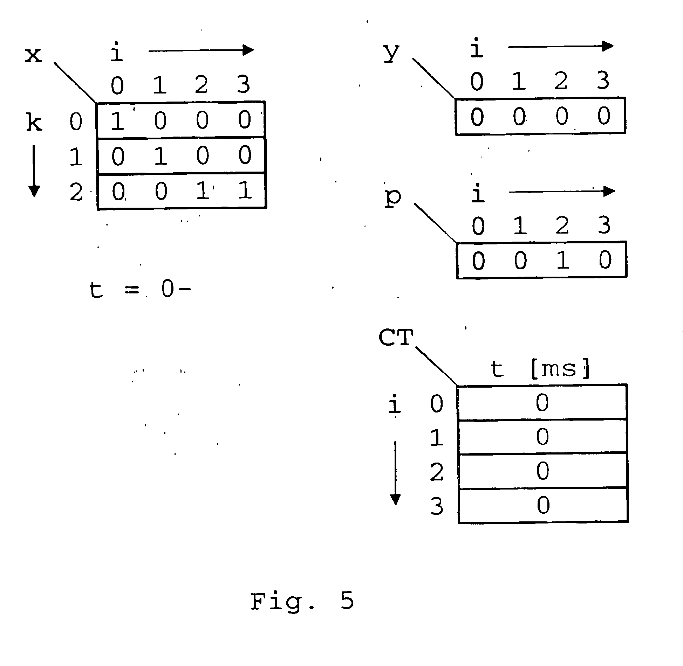

Die Figur 5 umfasst eine erste Speichereinrichtung x, welche aus M Zeilen mit jeweils N Speicherzellen aufgebaut ist, eine zweite Speichereinrichtung y, welche aus N Speicherzellen aufgebaut ist und eine dritte Speichereinrichtung p, welche ebenfalls aus N Speicherzellen aufgebaut ist. N gibt dabei die Anzahl der Teilaufgaben und M die Anzahl möglichen gewünschten Aufrufzeitpunkte der Teilaufgaben TA innerhalb eines Zyklus an. Eine Speicherzelle kann dabei die Zustände 0 und 1 annehmen. Die Indizes der Zeilen k laufen von 0 bis M-1, die Indizes der Speicherzellen i von 0 bis N-1. Aus Gründen der Einfachheit wurde in der Figur M=3 und N=4 gesetzt. Weiterhin umfasst die Anordnung eine vierte Speichereinrichtung CT, welche zur Speicherung von N Zeitpunkten vorgesehen ist.

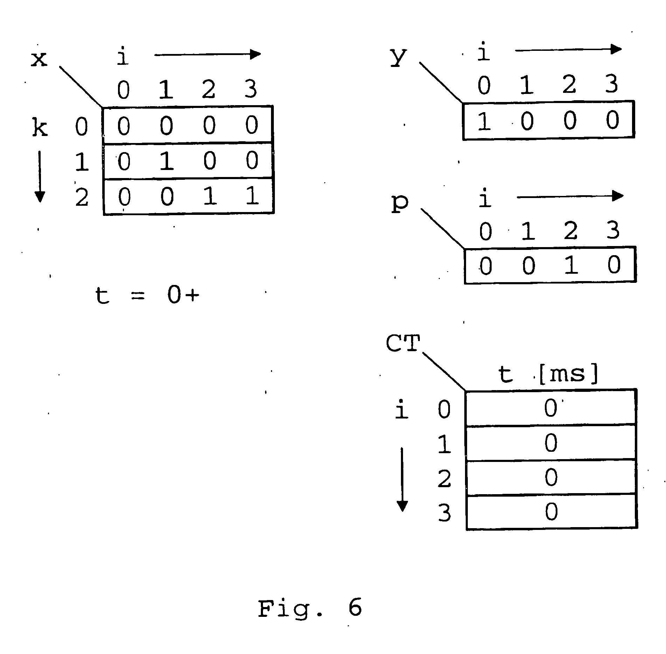

Die Figuren 6 bis 10 zeigen wie die Figur 5 den Inhalt der angeführten Speichereinrichtungen, nur zu den Zeitpunkten t=0+, t=30-, t=30+, t=60- und t=60+, jeweils vor und nach der Ausführung des ersten Teilprozesses P1.

Die Funktion der in den Figuren dargestellten Anordnung ist wie folgt:

In einem Initialisierungsvorgang werden in die erste Speichereinrichtung x die gewünschten Aufrufzeitpunkte der ersten bis vierten Teilaufgabe TA1..TA4 eingetragen. Dazu werden die jeweiligen Speicherzellen auf 1 gesetzt. Im vorliegenden Beispiel soll die erste Teilaufgabe TA1 zum ersten möglichen Zeitpunkt innerhalb eines Zyklus, die zweite Teilaufgabe TA2 zum zweiten möglichen Zeitpunkt und die dritte und vierte Teilaufgabe TA3 und TA4 zum dritten möglichen Zeitpunkt innerhalb eines Zyklus ausgeführt werden. Daraus folgt, dass in die Zeile 0 der ersten Speichereinrichtung x die Ziffern 1000 in die Zeile 1 die Ziffern 0100 und in die Zeile 2 die Ziffern 0011 eingetragen werden müssen. Der Index der Speicherzellen i gibt dabei auch gleichzeitig die Prioritätsstufe der jeweiligen Teilaufgaben an, wobei i=0 die niedrigste, i=N-1 die höchste Priorität angibt.

Beim Initialisierungsvorgang werden die Speicherzellen 0..N-1 der zweiten Speichereinrichtung y auf 0 gesetzt. In der dritten Speichereinrichtung p werden die Speicherzellen jener Teilaufgaben TA auf 1 gesetzt, die innerhalb eines Zyklus immer zum selben Zeitpunkt ausgeführt werden sollen. Im vorliegenden Beispiel soll die dritte Teilaufgabe TA3 zu einem fixen Zeitpunkt, die übrigen Teilaufgaben TA dagegen zu einem variablen Zeitpunkt aufgerufen werden. Die dritte Speichereinrichtung p wird daher mit den Ziffern 0010 initialisiert. Die Speicherzellen der vierten Speichereinrichtung CT werden während der Initialisierung auf 0 gesetzt. Der Initialisierungsvorgang ist damit abgeschlossen. Der Inhalt der Speichereinrichtungen zum Zeitpunkt t=0- wird auch durch die Figur 5 veranschaulicht.

Der erste Teilprozess P1 liest die erste Speichereinrichtung x zeilenweise in einem gleichbleibenden Zeitabstand T und zyklisch wiederkehrend aus. Der Zeitabstand T wird beispielsweise auf 30ms festgelegt. Zum Zeitpunkt t=0 wird die Zeile 0 der ersten Speichereinrichtung x mittels einer bitweisen ODER-Funktion in die zweite Speichereinrichtung y übertragen. Danach wird die bitweise UND-Verknüpfung der Zeile 0 der ersten Speichereinrichtung x und der dritten Speichereinrichtung p gebildet und das Ergebnis in die Zeile 0 der ersten Speichereinrichtung x übertragen. Für die erste Speichereinrichtung x ergeben sich daher die Ziffern 0000, 0100, 0011 und für die zweite Speichereinrichtung y die Ziffern 1000. Siehe dazu auch die Figur 6, welche die Speichereinrichtungen zum Zeitpunkt t=0+ zeigt.

Der zweite Teilprozess P2 läuft zeitlich asynchron zum ersten Teilprozess P1 ab. Dabei wird die Teilaufgabe TA mit der höchsten Prioritätsstufe ermittelt und ausgeführt, im gezeigten Beispiel also die erste Teilaufgabe TA1.

In der ersten Teilaufgabe TA1 werden zuerst spezifische Tätigkeiten ausgeführt und am Ende durch Bestimmung des Zeitintervalls dT die gewünschte Wiederaufrufzeit ermittelt. Eine Bedingung dafür ist allerdings, dass das Zeitintervall dT das Produkt aus der Anzahl der möglichen gewünschten Aufrufzeitpunkte M und dem Zeitabstand T nicht überschreiten darf. Im Beispiel liegt diese Grenze bei 90ms, das gewünschte Zeitintervall dT wird im Beispiel zu dT=60ms festgelegt. Die Ausführungsdauer der ersten Teilaufgabe TA1 wird im Beispiel mit 20ms angenommen.

Mit Hilfe der Unterfunktion SETBIT wird daher in die Zeile i=0 der vierten Speichereinrichtung CT die Wiederaufrufzeit 60 ms eingetragen. Da die Systemzeit t=20ms kleiner als die Wiederaufrufzeit ist, wird das der ersten Teilaufgabe TA1 zugeordnete Bit in der zweiten Speichereinrichtung y zurückgesetzt und die Speicherzelle 0 in der Zeile a=2 der ersten Speichereinrichtung x auf 1 geändert. Der Inhalt der ersten Speichereinrichtung x lautet daher 0000, 0100, 1011 und der zweiten Speichereinrichtung y 0000.

Die Ausführungsdauer der ersten Teilaufgabe TA1 wurde im Beispiel mit 20ms angenommen. Da der erste Teilprozess zu diesem Zeitpunkt noch im Wartezustand verharrt und y=0 ist, führt der zweite Teilprozess P2 die Leerfunktion IDLE aus. Dieser benötigt zur Ausführung 10ms

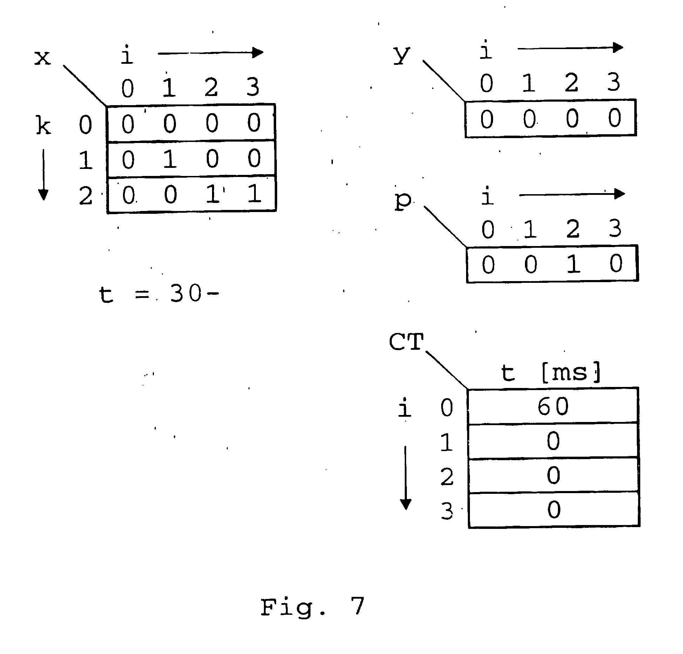

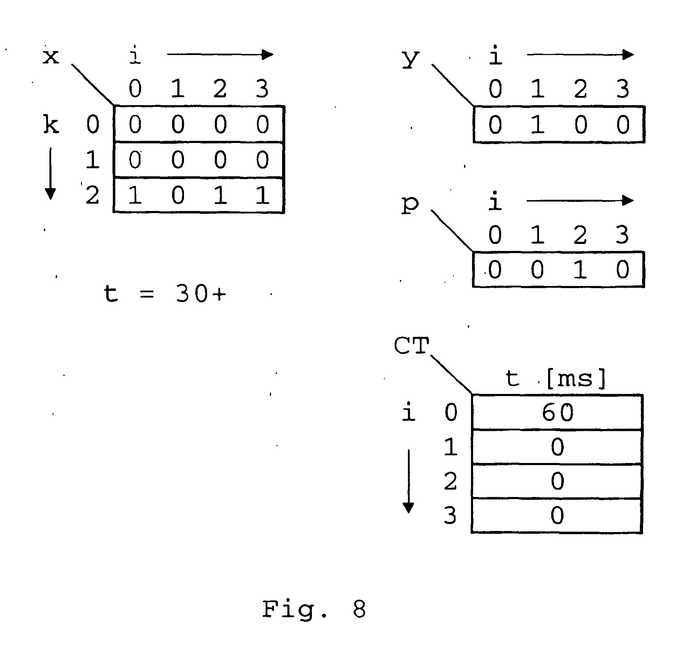

Zum Zeitpunkt t=30ms wird die Zeile 1 der ersten Speichereinrichtung x mittels einer bitweisen ODER-Funktion in die zweite Speichereinrichtung y übertragen. Danach wird die bitweise UND-Verknüpfung der Zeile 1 der ersten Speichereinrichtung x und der dritten Speichereinrichtung p gebildet und das Ergebnis in die Zeile 1 der ersten Speichereinrichtung x übertragen. Für die erste Speichereinrichtung x ergeben sich daher die Ziffern 0000, 0000, 1011 und für die zweite Speichereinrichtung y die Ziffern 0100. Figur 7 zeigt die Speichereinrichtungen zum Zeitpunkt t=30-, vor der Ausführung, und Figur 8 zum Zeitpunkt t=30+, nach der Ausführung des ersten Teilprozesses P1.

Der zweite Teilprozess P2 ermittelt wiederum die Teilaufgabe TA mit der höchsten Prioritätsstufe und führt diese aus, im gezeigten Beispiel also die zweite Teilaufgabe TA2.

In der zweiten Teilaufgabe TA2 werden zuerst wieder spezifische Tätigkeiten ausgeführt. Das gewünschte Zeitintervall dT für die zweite Teilaufgabe TA2 wird im Beispiel zu dT=10ms festgelegt. Die Ausführungsdauer zweiten Teilaufgabe TA2 wird im Beispiel mit 20ms angenommen.

Mit Hilfe der Unterfunktion SETBIT wird daher in die Zeile i=1 der vierten Speichereinrichtung CT die Wiederaufrufzeit 40 ms eingetragen. Da die Systemzeit t=40ms gleich der Wiederaufrufzeit ist, bleiben die erste Speichereinrichtung x und die zweite Speichereinrichtung y unverändert. Der Inhalt der ersten Speichereinrichtung x lautet daher 0000, 0000, 1011 und der zweiten Speichereinrichtung y 0100.

Zum Zeitpunkt t=40ms führt der zweite Teilprozess P2 wieder die Teilaufgabe TA mit der höchsten Prioritätsstufe aus, im vorliegenden Fall also abermals die zweite Teilaufgabe TA2.

Im Beispiel wird angenommen, dass die der zweiten Teilaufgabe TA2 zugeordneten Tätigkeiten vorerst abgeschlossen sind. Das gewünschte Zeitintervall dT für die zweite Teilaufgabe TA2 wird im Beispiel daher zu dT=80ms festgelegt. Die Ausführungsdauer der zweiten Teilaufgabe TA2 wird im Beispiel wieder mit 20ms angenommen.

Mit Hilfe der Unterfunktion SETBIT wird daher in die Zeile i=1 der vierten Speichereinrichtung CT die Wiederaufrufzeit 120 ms eingetragen. Da die Systemzeit t=60ms kleiner als die Wiederaufrufzeit ist, wird das der zweiten Teilaufgabe TA2 zugeordnete Bit in der zweiten Speichereinrichtung y zurückgesetzt und die Speicherzelle 1 in der Zeile a=1 der ersten Speichereinrichtung x auf 1 geändert. Der Inhalt der ersten Speichereinrichtung x lautet daher 0000, 0100, 1011 und der zweiten Speichereinrichtung y 0000.

Zum Zeitpunkt t=60ms wird die Zeile k=2 der ersten Speichereinrichtung x mittels einer bitweisen ODER-Funktion in die zweite Speichereinrichtung y übertragen. Danach wird die bitweise UND-Verknüpfung der Zeile k=2 der ersten Speichereinrichtung x und der dritten Speichereinrichtung p gebildet und das Ergebnis in die Zeile k=2 der ersten Speichereinrichtung x übertragen. Für die erste Speichereinrichtung x ergeben sich daher die Ziffern 0000, 0100, 0010 und für die zweite Speichereinrichtung y die Ziffern 1011.

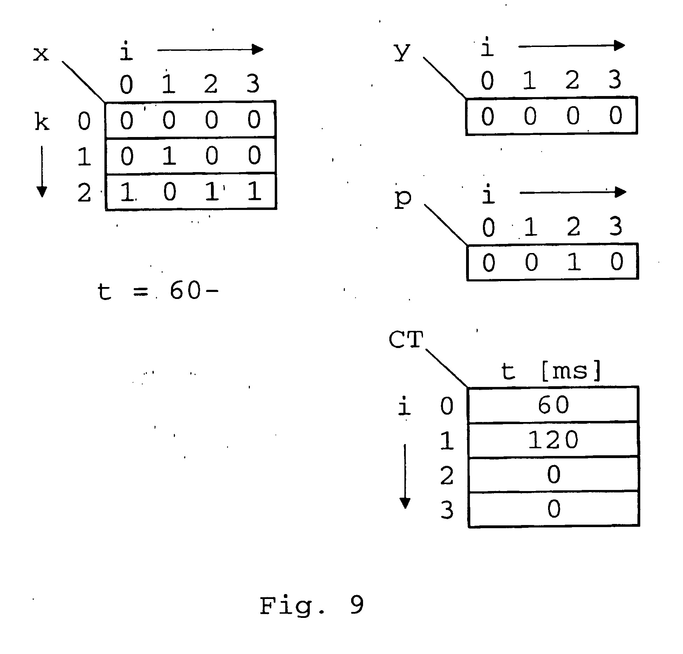

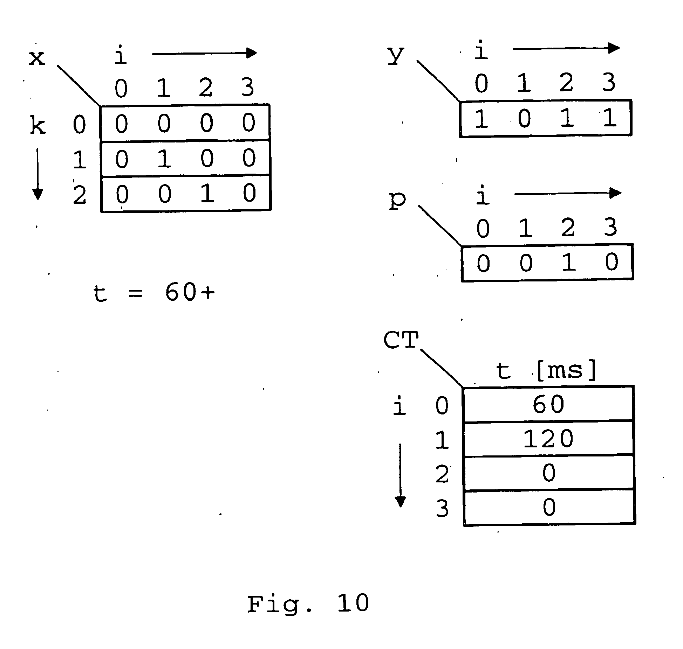

Figur 9 zeigt die Speichereinrichtungen zum Zeitpunkt t=60-, vor der Ausführung, und Figur 10 zum Zeitpunkt t=60+, nach der Ausführung des ersten Teilprozesses P1.

Das beschriebene Verfahren läuft in der beschriebenen Weise weiter ab, wobei der erste Teilprozess den Auslesevorgang nach jeweils t = M · T = 3 · 30 = 90ms bei der Zeile k=0 der ersten Speichereinrichtung x beginnt. Die erste Speichereinrichtung x ist also als Ringspeicher aufgebaut.

Die vierte Speichereinrichtung CT ist für den reibungslosen Ablauf des beschriebenen Beispiels des erfindungsgemäßen Verfahrens nur insofern zwingend erforderlich, als in der Unterfunktion SETBIT ein Zwischenspeicher für die Wiederaufrufzeit nötig ist. Der Inhalt kann daher nach der Ausführung der Unterfunktion SETBIT auch wieder verworfen werden. Im gezeigten Beispiel können die eingetragenen Zeiten jedoch auch für weitere Prozesse verwendet werden, bei denen auf eine genauere Festlegung der Wiederaufrufzeit ankommt, da die mögliche Unterteilung in Zeitscheiben nur von der Länge der einzelnen Datenfelder der vierten Speichereinrichtung CT abhängt, nicht jedoch vom Aufbau der ersten Speichereinrichtung x.

Die einzelnen Aufgaben werden im Beispiel weiterhin verzögerungs- und unterbrechungsfrei ausgeführt. Dies entspricht nicht der physikalischen Realität, jedoch wurde diese Vereinfachung vorgenommen um die Darstellung des Ablaufs des erfindungsgemäßen Verfahrens nicht unnötig zu verkomplizieren. In der tatsächlichen Realisierung müssen daher die entsprechenden Bearbeitungszeiten berücksichtigt werden. Insbesondere ist darauf zu achten, dass keine Konflikte im Zugriff auf die einzelnen Systemressourcen entstehen, beispielsweise wenn bei parallel laufenden Prozessen zur selben Zeit die selbe Speichereinrichtung beschrieben werden soll.

In diesem Fall ist beispielsweise mit Hilfe eines einer Speichereinrichtung zugeordneten Markierungsbits dafür Sorge zu tragen, dass während des Zugriffs auf diese Speichereinrichtung durch einen ersten Prozess der Zugriff durch einen zweiten Prozess unterbunden wird. Repräsentiert dabei ein gesetztes Bit den möglichen Zugriff, setzt der zugreifende Prozess das Bit vor dem eigentlichen Speicherzugriff auf 0 und danach wieder auf 1. Ein zwischenzeitlicher Zugriff eines anderen Prozesses wird bei dieser Methode immer dann abgewiesen, wenn das Bit den Wert 0 beinhaltet.

Denkbar ist aber auch, dass ein Prozess, welcher auf eine Speichereinrichtung zugreift, einen parallel laufenden Prozess überhaupt kurzfristig anhält, um den Zugriff auf die Speichereinrichtung durch den parallel laufenden Prozess zu unterbinden.

## Patentansprüche

1. Verfahren zur Steuerung eines Prozesses, wobei
- der Prozess in mehrere Teilaufgaben (TA) gegliedert ist und diesen Teilaufgaben (TA) verschiedene Prioritätsstufen zugewiesen sind,
**dadurch gekennzeichnet,**
- **dass** die Teilaufgaben (TA) sequentiell und jeweils unterbrechungsfrei ausgeführt werden,
- **dass** in einer ersten Speichereinrichtung (x) Informationen über den gewünschten Startzeitpunkt der einzelnen Teilaufgaben (TA) gespeichert werden und
- **dass** die Teilaufgaben (TA) anhand der in der ersten Speichereinrichtung (x) gespeicherten Informationen entsprechend dem gewünschten Startzeitpunkt und der Prioritätsstufe der jeweiligen Teilaufgabe (TA) ausgeführt werden
- **dass** die Prioritätsstufen der Teilaufgabe mittels einer binären Zahl gespeichert werden, wobei diese binäre Zahl zumindest ebenso viele Stellen aufweist, wie Teilaufgaben (TA) vorhanden sind, und
- **dass** einem Stellenwert einer Ziffer dieser binären Zahl jeweils eine Prioritätsstufe zugeordnet wird.

2. Verfahren nach Anspruch 1, **dadurch gekennzeichnet,**
- **dass** die erste Speichereinrichtung (x) als Ringspeicher organisiert wird und
- **dass** diese erste Speichereinrichtung (x) zyklisch zu festgelegten Zeitpunkten ausgelesen wird.

3. Verfahren nach einem der Ansprüche 1 bis 2, **dadurch gekennzeichnet, dass** während der Ausführung einer Teilaufgabe (TA) die gewünschte Aufrufzeit einer Teilaufgabe (TA), insbesondere der ausgeführten Teilaufgabe (TA), ermittelt wird.

4. Verfahren nach einem der Ansprüche 1 bis 3, **dadurch gekennzeichnet,**
- **dass** für die Steuerung ein erster Teilprozess (P1) und ein zweiter Teilprozess (P2) vorgesehen ist,
- **dass** der erste Teilprozess (P1) asynchron zum zweiten Teilprozess (P2) abläuft,
- **dass** der erste Teilprozess (P1) die erste Speichereinrichtung (x) zyklisch zu festgelegten Zeitpunkten ausliest und
- **dass** der zweite Teilprozess (P2) die Teilaufgaben TA sequentiell abarbeitet.

5. Verfahren nach Anspruch 4, **dadurch gekennzeichnet,**
- **dass** der erste Teilprozess (P1) die erste Speichereinrichtung (x) zyklisch zu festgelegten Zeitpunkten ausliest und die auszuführenden Teilaufgaben (TA) in eine zweite Speichereinrichtung (y) überträgt und
- **dass** der erste Teilprozess (P1) die ausgelesene Speichereinheit der ersten Speichereinrichtung (x) bis auf die in einer dritten Speichereinrichtung (p) markierten Teilaufgaben (TA) löscht.

6. Verfahren nach Anspruch 5, **dadurch gekennzeichnet, dass** der zweite Teilprozess (P2) die zweite Speichereinrichtung (y) ausliest und die Teilaufgabe (TA) mit der höchsten Priorität ausführt, wenn die zweite Speichereinrichtung (y) nicht leer ist und eine Leerfunktion (IDLE) aufruft, wenn die zweite Speichereinrichtung (y) leer ist.

7. Anordnung zur Durchführung des Verfahrens nach einem der Ansprüche 1 bis 6,
**dadurch gekennzeichnet,**
- **dass** Mittel für ein sequentielles und jeweils unterbrechungsfreies Ausführen von Teilaufgaben (TA) eines Prozesses vorgesehen sind, wobei dieser Prozess in mehrere Teilaufgaben (TA) gegliedert ist und diesen Teilaufgaben (TA) verschiedene Prioritätsstufen zugewiesen sind,
- **dass** Mittel für eine Speicherung von Informationen über gewünschte Startzeitpunkte der jeweiligen Teilaufgaben (TA) vorgesehen sind,
- **dass** die Mittel für sequentielle und jeweils unterbrechungsfreies Ausführen von Teilaufgaben (TA) Mittel für ein Lesen der gewünschten Startzeitpunkte und Prioritätsstufen der jeweiligen Teilaufgaben (TA) umfassen,
- **dass** Mittel für ein Speichern der Prioritätsstufen mittels einer binären Zahl vorgesehen sind und
- **dass** Mittel für ein Zuordnen eines Stellenwerts einer Ziffer dieser binären Zahl zu einer Prioritätsstufe vorgesehen sind.

## Claims

1. Method for controlling a process wherein
- the process is divided into a plurality of subtasks (TA) and different priority levels are assigned to these subtasks (TA),
**characterised in that**
- the subtasks (TA) are executed sequentially and each without interruption,
- information about the desired starting time of the individual subtasks (TA) is stored in a first storage device (x), and
- the subtasks (TA) are executed on the basis of the information stored in the first storage device (x) according to the desired starting time and the priority level of the subtask (TA) concerned.
- the priority levels of the subtask are stored by means of a binary number which has as many places as there are subtasks (TA), and
- one priority level is assigned to each significance of a digit of said binary number.

2. A method according to Claim 1, **characterised in that**
- the first storage device (x) is organised as a circular buffer and
- this first storage device (x) is read out cyclically at fixed times.

3. A method according to either of Claims 1 to 2, **characterised in that** during the execution of a subtask (TA) the desired call time of a subtask (TA), in particular of the subtask (TA) being executed, is determined.

4. A method according to any one of Claims 1 to 3, **characterised in that**
- a first subprocess (P1) and a second subprocess (P2) are provided for the control,
- the first subprocess (P1) runs asynchronously to the second subprocess (P2),
- the first subprocess (P1) reads out the first storage device (x) cyclically at fixed times and
- the second subprocess (P2) executes the subtasks TA sequentially.

5. A method according to Claim 4, **characterised in that**
- the first subprocess (P1) reads out the first storage device (x) cyclically at fixed times and transfers the subtasks (TA) that are to be executed to a second storage device (y) and
- the first subprocess (P1) deletes the read-out storage unit of the first storage device (x) except for the subtasks (TA) marked in a third storage device (p).

6. A method according to Claim 5, **characterised in that** the second subprocess (P2) reads out the second storage device (y) and executes the subtask (TA) with the highest priority when the second storage device (y) is not empty, and calls an idle function (IDLE) when the second storage device (y) is empty.

7. An arrangement to carry out the method according to any one of Claims 1 to 6, **characterised in that**
- means are provided for a sequential and in each case uninterrupted execution of subtasks (TA) of a process, wherein the said process is divided into a plurality of subtasks (TA) and different priority levels are assigned to these subtasks (TA),
- means are provided for storing information about desired starting times of the individual subtasks (TA),
- the means provided for sequential and in each case uninterrupted execution of subtasks (TA) encompass means for reading the desired starting times and priority levels of the subtasks (TA) concerned,
- means are provided for storing the priority levels by means of a binary number, and
- means are provided for assigning a significance of a digit of said binary number to a priority level.

## Revendications

1. Procédé de commande d'un processus,
selon lequel le processus est divisé en plusieurs tâches partielles (TA) et différents niveaux de priorité sont attribués à ces tâches partielles (TA),
**caractérisé**
- **en ce que** les tâches partielles (TA) sont exécutées de manière séquentielle et à chaque fois sans interruption,
- **en ce que** des informations sur l'instant de démarrage souhaité des différentes tâches partielles (TA) sont enregistrées dans un premier dispositif de mémoire (x) et
- **en ce que** les tâches partielles (TA) sont exécutées à l'aide des informations enregistrées dans le premier dispositif de mémoire (x) conformément à l'instant de démarrage souhaité et au niveau de priorité de la tâche partielle (TA) respective
- **en ce que** les niveaux de priorité de la tâche partielle sont enregistrés au moyen d'un nombre binaire, ce nombre binaire comportant au moins autant de bits qu'il y a de tâches partielles (TA), et
- **en ce qu'**un niveau de priorité est attribué à chaque fois à une valeur de bit d'un chiffre de ce nombre binaire.

2. Procédé selon la revendication 1, **caractérisé**
- **en ce que** le premier dispositif de mémoire (x) est organisé en tant que mémoire en anneau et
- **en ce que** ce premier dispositif de mémoire (x) est lu cycliquement à des instants définis.

3. Procédé selon une des revendications 1 à 2, **caractérisé en ce que**, durant l'exécution d'une tâche partielle (TA), on détermine le temps d'appel souhaité d'une tâche partielle (TA), en particulier celui de la tâche partielle (TA) exécutée.

4. Procédé selon une des revendications 1 à 3, **caractérisé**
- **en ce qu'**un premier processus partiel (P1) et un deuxième processus partiel (P2) sont prévus pour la commande,
- **en ce que** le premier processus partiel (P1) se déroule de manière asynchrone par rapport au deuxième processus partiel (P2),
- **en ce que** le premier processus partiel (P1) lit cycliquement le premier dispositif de mémoire (x) à des instants définis et
- **en ce que** le deuxième processus partiel (P2) prend en charge les tâches partielles TA de manière séquentielle.

5. Procédé selon la revendication 4, **caractérisé**
- **en ce que** le premier processus partiel (P1) lit le premier dispositif de mémoire (x) de manière cyclique à des instants définis et qu'il transmet les tâches partielles (TA) à exécuter dans un deuxième dispositif de mémoire (y) et
- **en ce que** le premier processus partiel (P1) efface l'unité de mémoire lue du premier dispositif de mémoire (x) jusqu'aux tâches partielles (TA) marquées dans un troisième dispositif de mémoire (p).

6. Procédé selon la revendication 5, **caractérisé en ce que** le deuxième processus partiel (P2) lit le deuxième dispositif de mémoire (y) et exécute la tâche partielle (TA) ayant la priorité la plus élevée lorsque le deuxième dispositif de mémoire (y) n'est pas vide et appelle une fonction vide (IDLE) lorsque le deuxième dispositif de mémoire (y) est vide.

7. Appareil pour exécuter le procédé selon une des revendications 1 à 6,
**caractérisé**
- **en ce que** sont prévus des moyens pour une exécution séquentielle et à chaque fois sans interruption de tâches partielles (TA) d'un processus, ce processus étant divisé en plusieurs tâches partielles (TA) et différents niveaux de priorité étant attribués à ces tâches partielles (TA),
- **en ce que** sont prévus des moyens pour un enregistrement d'informations sur des instants de démarrage souhaités des tâches partielles (TA) respectives,
- **en ce que** les moyens pour l'exécution séquentielle et à chaque fois sans interruption des tâches partielles (TA) comportent des moyens pour une lecture des instants de démarrage souhaités et des niveaux de priorité des tâches partielles (TA) respectives,
- **en ce que** sont prévus des moyens pour un enregistrement des niveaux de priorité au moyen d'un nombre binaire et
- **en ce que** sont prévus des moyens pour une attribution d'une valeur de bit d'un chiffre de ce nombre binaire à un niveau de priorité.
